Europäisches Patentamt

European Patent Office

Office européen des brevets

(19)

(11) Publication number: **0 262 820**
**A2**

(12) **EUROPEAN PATENT APPLICATION**

(21) Application number: 87307992.5

(51) Int. Cl.⁴: **H02M 3/335**

(22) Date of filing: **10.09.87**

(30) Priority: **30.09.86 US 913788**

(43) Date of publication of application:
**06.04.88 Bulletin 88/14**

(84) Designated Contracting States:
**DE FR GB**

(71) Applicant: **Hewlett-Packard Company**
**3000 Hanover Street**
**Palo Alto California 94304(US)**

(72) Inventor: **Felps, Jimmie D.**
**4862 Garden Place**
**Colorado Springs Colorado 80907(US)**

(74) Representative: **Colgan, Stephen James et al**
**CARPMAELS & RANSFORD 43 Bloomsbury**
**Square**
**London WC1A 2RA.(GB)**

(54) **Apparatus for non-dissipative switching transistor snubber.**

(57) A high efficiency non-dissipative snubber circuit suitable for most power supplies used in international markets is disclosed. Circuit uses diode-capacitor-inductor structure $(CR_4\text{-}CR_2\text{-}C_1\text{-}L_1)$ to capture input voltage equivalent and reverse polarity on snubber capacitor $C_1$. No external voltage source is required.

FIG 6

## APPARATUS FOR NON-DISSIPATIVE SWITCHING TRANSISTOR SNUBBER

### Background of the Invention

This invention deals generally with power supplies, and more specifically with non-dissipative switching transistor snubbers.

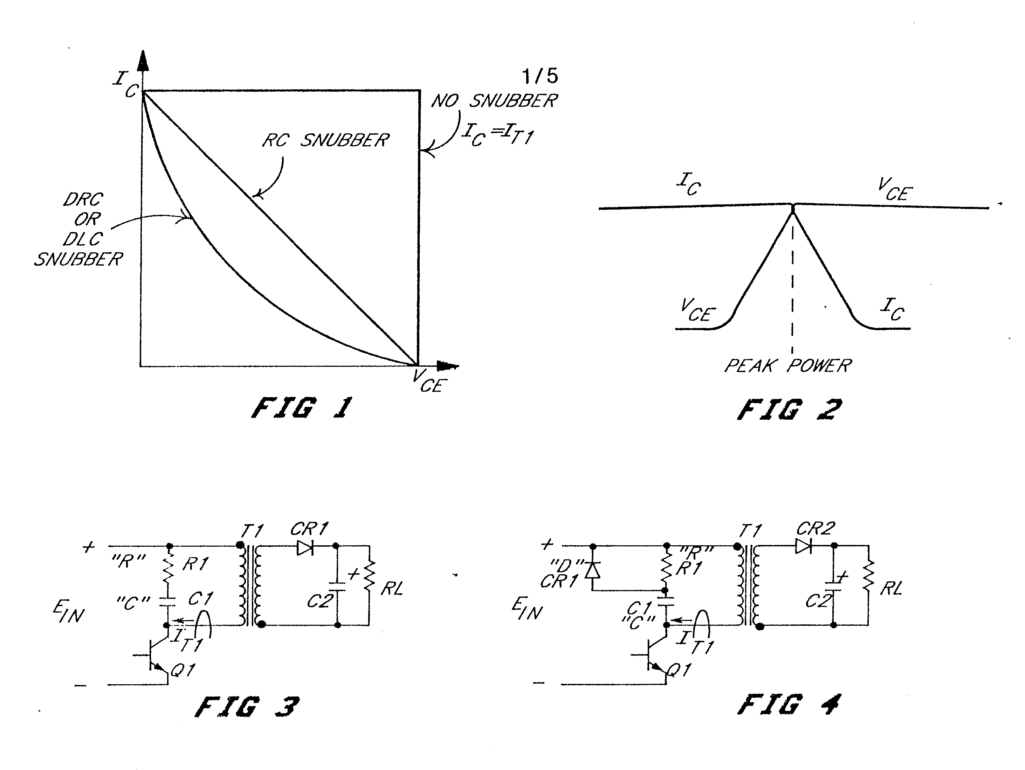

A switching transistor snubber is circuitry added to a switchmode power supply which reshapes the transistor load line to reduce stresses on the switch transistor, and can also reduce electromagnetic interference (EMI) caused by the switchmode power supply. The switch transistor in a switchmode power supply is turning off into an inductive load, which causes a transistor load line as shown in Figure 1 for no snubber. If the load line is not reshaped by a snubber, circuit peak collector voltages are coincident with peak collector currents as shown in Figure 2, resulting in maximum power dissipated in the switch transistor.

A dissipative resistor-capacitor (RC) snubber circuit in a single-ended flyback converter is shown in Figure 3. While transistor Q1 is on, capacitor C1 is charged to a value of Ein through resistor R1. When transistor Q1 is turned off, the current from transformer T1, which would pass through transistor Q1 without a snubber, is diverted to capacitor C1 and resistor Rl. Power typically dissipated by resistor Rl is:

$$P = (f) (C1) (2Ein)2.$$

An offline converter using: C1 = 2000pF, f = 20kHz, and Ein(max) = 360 V, would find P = 20.7 watts.

A dissipative diode-resistor-capacitor (DRC) snubber circuit for a single-ended flyback converter is shown in Figure 4. The function of the ciruit is similar to the RC snubber circuit. However, the power consumption, although still high, is approximately halved by shunting resistor R1 with a diode CR1.

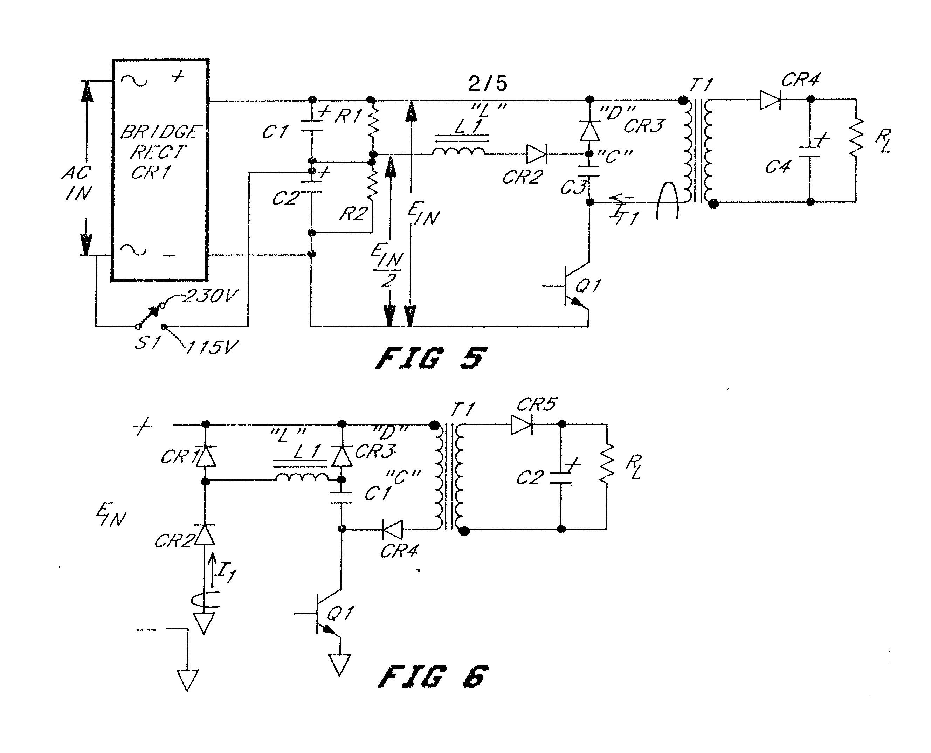

A nondissipative diode-inductor-capacitor (DLC) snubber circuit disclosed in a paper titled "DESIGNING NON-DISSIPATIVE CURRENT SNUBBERS FOR SWITCHED MODE CONVERTERS" by Eugene C. Whitcomb at the Proceedings of the Sixth National Solid-State Power Conversion Conference in May 1979 is shown in Figure 5. This snubber would probably work in a non-dissipative manner for 115 V AC power, but has drawbacks when operating with 230 V AC power. The voltage at the node between resistors R1 and R2 tends to be pulled down by the current drawn through diode CR2. Consequently, capacitor C1 would have to be a high voltage capacitor, rated at approximately 300 Volts or more. This part is physically larger than most standard capacitors, and is less common and therefore more expensive. Common objectives in designing power supplies for international markets include efficiency of power and physical space, and adaptability to international power standards (115/230V).

### Summary of the Invention

In accordance with the illustrated preferred embodiment of the present invention, a practical and efficient non-dissipative switching transistor snubber circuit is realized by adding a diode to a prior art non-dissipative switching transistor snubber and using residual energy in a snubber capacitor resulting from diverting current from the switching transistor during turn-off. The purpose of the snubber circuit is to charge the capacitor to the input voltage, thus shielding the switching transistor from sudden rise times and peak power draws. This circuit takes advantage of the fact that the capacitor is charged to the value it needs at one point in the cycle, but that the polarity is wrong. The added diode holds the correct charge on the capacitor. By using one-half cycle of a resonant LC cycle, the polarity on the capacitor is reversed. Another diode stops the resonant LC cycle. Since no resistive elements reside in the circuit, the circuit ideally dissipates no power. The circuit works equally well with 115 V or 230 V AC power. This design obviates the need for high voltage capacitors, provides for fewer oscillations, and uses standard, smaller, and more efficent parts.

### Brief Description of the Figures

Figure 1 shows transistor load lines for power supplies having no snubber circuit, an RC snubber circuit, and a DRC or DLC circuit.

Figure 2 shows a graph of the collector current Ic vs. the collector voltage Vce for a non-snubbed power supply circuit.

Figure 3 shows an RC dissipative snubber circuit for a single-ended flyback converter.

Figure 4 shows an DRC dissipative snubber circuit for a single-ended flyback converter.

Figure 5 shows a prior art nondissipative DLC snubber circuit

Figure 6 shows the preferred embodiment of the present invention.

Figure 7 shows an alternate embodiment of the present invention.

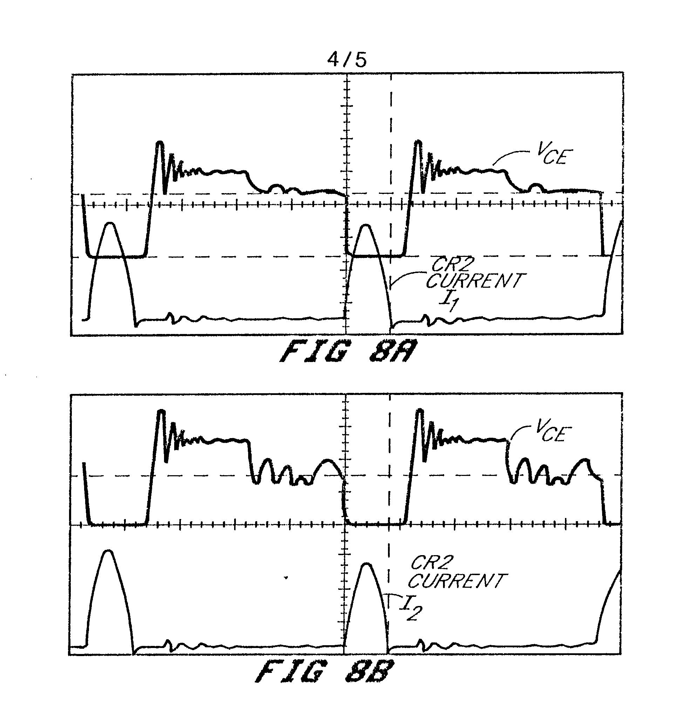

Figures 8A and 8B show timing diagrams for collector current Ic and collector voltage Vce for the embodiments of the present invention shown in Figures 6 and 7.

Figure 9 shows phase relationships for current and voltage in a resonant LC circuit.

Figure 10 shows the idealized voltage waveform of the collector for the alternate embodiment.

Figure 11 shows the actual voltage waveform of the collector for the alternate embodiment.

Description of the Preferred Embodiment

Figure 6 shows the illustrated preferred embodiment of the present invention. The object of inductor L1 is to place a charge on capacitor C1 equal to or close to Ein with a polarity of plus to minus from top to bottom while transistor Q1 is on. Then C1 will divert the transformer primary current from transistor Q1 through capacitor C1 and diode CR3 while transistor Q1 is turning off to relieve the stress in transistor Q1, as shown in the load lines in Figure 1.

Capacitor C1 becomes charged to a voltage polarity of minus to plus from top to bottom through diodes CR3 and CR4 when the collector voltage of transistor Q1 reaches its maximum value. The voltage across capacitor C1 equals the reset voltage of the transformer T1 primary plus a leakage inductance spike of transformer T1. This voltage can be and usually is greater than Ein. Diode CR4 prevents capacitor C1 from discharging until transistor Q1 turns back on. The voltage across capacitor C1 is of sufficient value but of opposite polarity of what is desired. Therefore a resonant LC circuit made up of inductor L1 and capacitor C1 reverses the voltage polarity on capacitor C1 during the on time of transistor Q1. Blocking diode CR2 stops oscillation at the end of one-half cycle leaving a voltage charge on capacitor C1 of plus to minus from top to bottom approximately equal to Ein. Any excess current stored in inductor L1 is dumped back into the source Ein through diode CR3.

The amount of time allowed to charge capacitor C1 needs to be less than the on time of transistor Q1 and is determined by:

Charge time = t = period/2 = [2(pi)(L1*C1)-(1/2)]/2

t = (pi)(L1*C1)(1/2)

where L1 and C1 determine the resonant frequency.

The charging path is from ground through diode CR2, inductor L1, capacitor C1, and transistor Q1 back to ground. In a lossless series resonant circuit (that is allowed to sustain oscillation) the total energy U in the circuit is equal to the energy Ub stored in the air gap (magnetic flux) of an inductor, plus the energy Ue stored in the electric field of a capacitor, or:

$$U = Ub + Ue = (1/2)L\dot{}i2 = (1/2)(q2)/C)$$

where i is the current in the inductor and q is the charge in the capacitor.

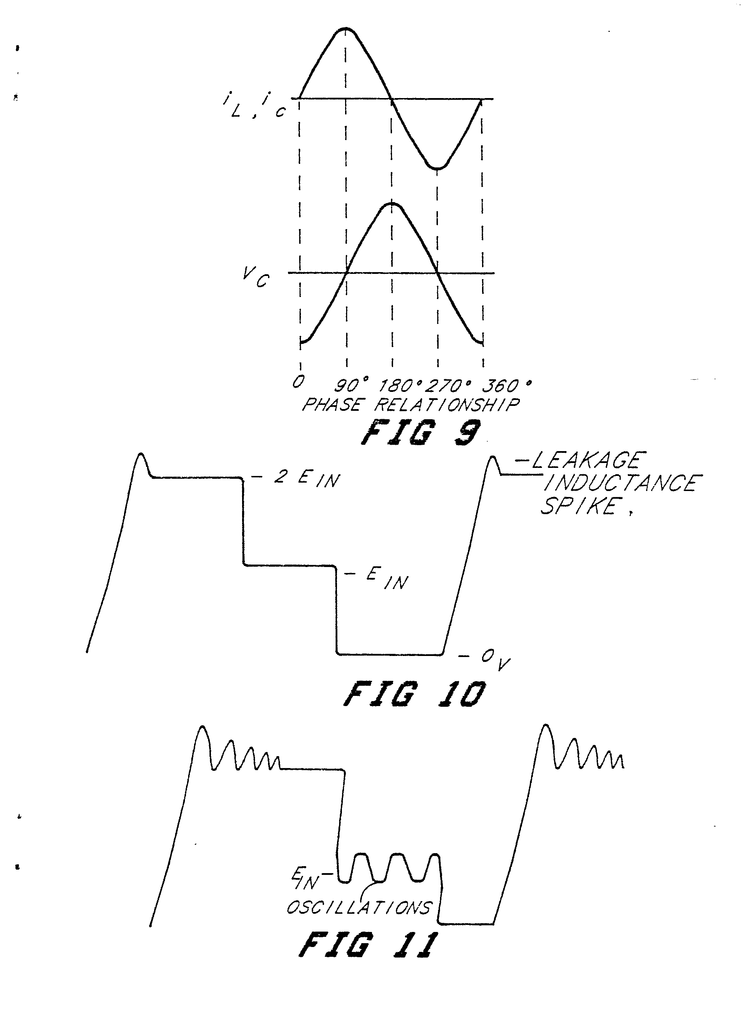

Figure 9 shows the phase relationship between current and voltage in an ideal resonant LC circuit. All the energy U will be in the inductor twice during a cyle of oscillation when the current i is at a maximum and flowing in one direction and at a maximum and flowing in the other direction, at 90 degrees and 270 degrees. All the energy will be in the capacitor twice during a cycle, when the capacity is charged to opposite polarities, at 0 or 360 degrees and 180 degrees.

In the snubber circuit shown in Figure 6, the voltage polarity across inductor L1 of plus to minus from left to right occurs from 0 to 90 degrees. That polarity reverses from 90 to 180 degrees. Current is blocked at 180 degrees by diode CR2 leaving all of the energy in capacitor C1. Diode CR3 serves as clamp to dump any excess energy back into the Ein voltage supply. Due to reverse recovery time in diode CR2, some current is put back into inductor L1 and diode CR1 is required to limit the reverse voltage seen by diode CR2 as inductor L1 oscillates with reverse biased diode CR2 and other stray capacitances. The required voltage has been established on capacitor C1 and the snubber circuit is prepared for transistor Q1 to turn off.

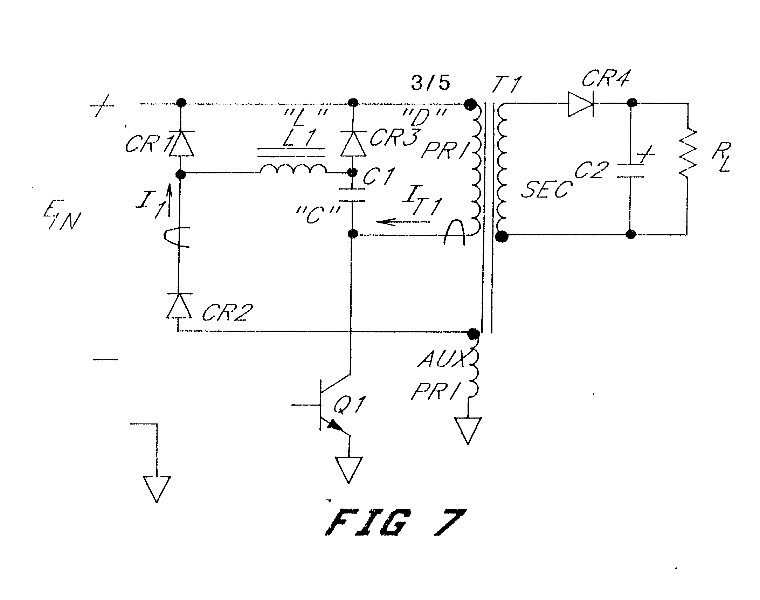

An alternate embodiment of the invention is shown in Figure 7. Here an auxillary winding provides additional voltage to charge capacitor C1 to Ein. During the time transformer T1 is transfering energy to the secondary, Vce on Q1 drops down and diode CR2 becomes slightly forward biased by the potential on capacitor C1.

In an ideal single-ended flyback converter with equal charging and discharging times for transformer T1, capacitor C1 would be left with a charge equal to Ein even without the auxillary primary. The idealized waveform at the collector of transistor Q1 is shown in Figure 10. Just prior to turn-on, the energy has dumped from transformer T1 and Vce returned to a voltage equal to Ein. The voltage across capacitor C1 would be Ein with a polarity of minus to plus from top to bottom because it charges through diode CR3 when the voltage on the collector of transistor Q1 is at its peak value. When transistor Q1 turns on, the resonant circuit formed by diode CR2, inductor L1, capacitor C1 and transistor Q1 would oscillate for one-half cycle (because diode CR2 allows current in only one direction). All of the energy stored in capacitor C1 would transfer to inductor L1 and then back to capacitor C1 leaving capacitor C1 charged to Ein again but with a polarity of plus to minus from top to bottom.

In practice though, the voltage left on capacitor C1 at turn-on is generally considerably less than Ein because the collector waveform does not look like Figure 10. Since the DLC snubber does not dissipate a significant amount of power many different resonant circuits exist during a complete cycle of transistor Q1. Oscillations of these various circuits do not decay much during the time transformer T1 is dumped because of the lack of resistance in the ciruit. The resonant circuit of transformer T1(primary), capacitor C1, inductor L1, and diode CR1 is likely to be oscillating at turn-on and depending on where energy is stored at turn-on will determine the voltage capacitor C1 can be charged to. Voltage drops caused by diode CR2 and transistor Q1 also represent lost energy due to Joule heating. See Figure 11.

If at turn-on capacitor C1 happened to have a voltage across it of (0.7)Ein, then at turn-off transistor Q1 would have to carry all of IT1, the current from the transformer until diode CR3 becomes forward biased. Transistor Q1 would have to carry all of IT1 until Vce = (0.3)Ein. So to be able to charge capacitor C1 to Ein, another winding was put on the transformer (Aux pri) to make up the lost charge on capacitor C1. The turns ratio of PR1:Aux pri equal to 6.33:1 is a good comprimise of sufficient charge on capacitor C1 and excess current that gets dumped through diode CR3. This ratio is not critical and a primary winding may already exist for other functions that can be used. The amount of voltage that is put on capacitor C1 by Aux pri is:

Vchg = s (Eaux)

in an ideal circuit.

In one example of this embodiment of the invention, inductor L1 = 680uH and capacitor C1 = 2200pF. Capacitor C1 must be a high quality capacitor (low dissipation factor) to handle the high peak currents. Wima FKPI capacitors are a good choice. Inductor L1 must also be of high quality. The voltage across inductor L1 is (Ein + Eaux) so the winding must be controlled to prevent winding shorts. Inductor L1 should be a gapped toroid or pot core to contain the magnetic field generated by inductor L1. Efficiency measured on this power supply was 88% where Vout = 120 V, Iout = .45 A, Pout = 54 W.

## Claims

1. Apparatus for snubbing switch transistor in a switchmode power supply comprising:
   capacitive means $C_1$ for holding voltage,
   capture means for holding input voltage equivalent acquired during transistor turn-off on the capacitive means $C_1$, and
   means for reversing polarity on capacitive means $C_1$, during transistor turn-on.

2. Apparatus as in claim 1 wherein the means for reversing polarity comprises:
   inductive means $L_1$ connected to capacitive means $C_1$ for drawing energy out of capacitive means $C_1$ by resonation, and for charging capacitive means $C_1$ to reverse polarity by resonation, and
   first diode means $CR_2$ for stopping resonation after polarity is reversed on capacitive means $C_1$,
   second diode means $CR_1$ for limiting reverse bias voltage across first diode means $CR_2$.

3. Apparatus as in claim 1 wherein the capture means comprises:
   first diode means $CR_3$ for clamping capacitive means during snubbing and for transferring excess energy acquired from inductive means $L_1$ during polarity reversal to an input power source $E_{in}$, and
   second diode means $CR_4$ for holding voltage on capacitive means $C_1$.

1/5

**FIG 1**

$I_C$

$V_{CE}$

NO SNUBBER
$I_C = I_{T1}$

RC SNUBBER

DRC
OR
DLC
SNUBBER

**FIG 2**

$I_C$

$V_{CE}$

$V_{CE}$

$I_C$

PEAK POWER

**FIG 3**

$E_{IN}$

+

"R"
R1

"C"
C1

$I_{T1}$

Q1

T1 CR1

C2

RL

−

**FIG 4**

$E_{IN}$

+

"D"
CR1

"R"
R1

"C"
C1

$I_{T1}$

Q1

T1 CR2

C2

RL

−

**FIG 5**

**FIG 6**

0 262 820

FIG 7

0 262 820

$V_{CE}$

CR2
CURRENT
$I_1$

*FIG 8A*

$V_{CE}$

CR2
CURRENT
$I_2$

*FIG 8B*

0 262 820

FIG 9

FIG 10

FIG 11